# EUROPÄISCHE PATENTSCHRIFT

(11) **EP 2 371 500 B1**
(45) Veröffentlichungstag und Bekanntmachung des Hinweises auf die Patenterteilung: **05.06.2013**
(21) Anmeldenummer: 11005084.6
(22) Anmeldetag: 22.08.2008
(51) Int. Cl.: B26D 5/00, C14B 5/00, B26F 1/46, B26F 1/40, C14B 5/02, B26D 7/28, B23D 25/12, B23D 36/00, B26D 5/34

(54) **System zum Stanzen von Zuschnittteilen**
System for punching blank parts
Système d'estampillage de pièces découpées

(30) Priorität: 18.10.2007 DE 102007050270
(43) Veröffentlichungstag der Anmeldung: 05.10.2011
(62) Teilanmeldung aus: 08014904.0
(73) Patentinhaber: Bruder, Wolfgang, Dipl.-Ing., 33607 Bielefeld (DE)
(72) Erfinder: Bruder, Wolfgang, Dipl.-Ing., 33607 Bielefeld (DE)
(74) Vertreter: Roche, von Westernhagen & Ehresmann

(56) Entgegenhaltungen:
- WO-A1-2008/025129
- DE-A1- 19 941 862
- DE-C1- 19 522 717
- DE-C1- 19 944 581
- DE-U1- 20 309 394
- DE-U1- 29 805 551
- DE-U1-202004 018 151

## Beschreibung

Die Erfindung betrifft zunächst ein System zum Stanzen von Zuschnittteilen aus flächenhaften Körpern gemäß dem Oberbegriff des Ansprüche 1 und 11.

Ein solches System zum Stanzen von Zuschnittteilen aus Tierhäuten, ist aus der DE-298 055 51 U1 bekannt.

Bei der Bearbeitung von flächenhaften Körpern, insbesondere von Tierhäuten, kommen unterschiedliche Trennverfahren zur Anwendung. Neben einem Schneiden der Tierhaut mit Rollmessern oder mit einem Hochdruck-Wasserstrahl bietet sich häufig das Stanzen an. Zum Erstellen einer Ledersitzgarnitur oder einer Leder-Sitzausstattung eines Kraftfahrzeuges werden typischerweise eine große Anzahl völlig unterschiedlich dimensionierter und geformter Zuschnittteile einer Lederhaut, beispielsweise einer Kuhhaut, benötigt. Diese unterschiedlichen Zuschnittteile können beispielsweise auch unterschiedliche Fehlergrade aufweisen, wobei berücksichtigt wird, dass ein im Endzustand gut sichtbares, beispielsweise am fertigen Sitzmöbel exponiertes Zuschnittteil, eine besonders gute Lederqualität aufweisen muss, wohingegen ein Zuschnittteil oder ein Abschnitt eines Zuschnittteils, welches nahe einer praktisch nicht sichtbaren Naht am fertigen Sitzmöbel angeordnet ist, eine geringere Qualität aufweisen kann. Keinesfalls sollten Fehler in der Tierhaut, wie durch Mückenstiche hervorgerufene Löcher oder Narben, auf einer exponierten Fläche des fertig gestellten Sitzmöbels, zum Beispiel auf einer Armlehne oder auf einer Sitzfläche, sichtbar sein.

Da sich bei Tierhäuten derartige natürliche Fehler allerdings nicht vermeiden lassen, werden die Zuschnittteile um die individuellen, bei jeder Tierhaut unterschiedlichen Fehlerstellen herum positioniert. Dies geschieht bei dem System des Standes der Technik dadurch, dass die entsprechenden Stanzeisen, die hinsichtlich ihrer geometrischen Form und Fläche der Form und Fläche des auszustanzenden Zuschnittteils entsprechen, auf einem Bearbeitungstisch, insbesondere auf einer Auflagefläche eines Bearbeitungstisches, in einer optimierten Weise händisch um die Fehlerstellen herum positioniert werden. Dabei ist einerseits von dem Benutzer zu beachten, dass vermieden wird, dass die Fehler in der Tierhaut an den sichtbaren Stellen der Zuschnittteile auftreten bzw. ungewünschte Fehlergrade in bestimmte Zuschnitteile hineinreichen. Andererseits ist es gewünscht, einen möglichst hohen Ausnutzungsgrad zu erzielen, das heißt den Ausschuss zu minimieren.

Bei dem System des Standes der Technik legt der Benutzer, also die Bedienperson, die Stanzeisen entsprechend den oben dargelegten Kriterien auf den Körper auf. Anschließend wird der Körper einem Stanzvorgang in einer Stanzvorrichtung unterzogen. Dabei werden die Stanzeisen zur Durchführung eines Trennvorganges beaufschlagt. Nach dem Trennvorgang sind die Zuschnittteile von den übrigen Bestandteilen der Tierhaut abgetrennt und können manuell entnommen werden.

Das optimierte Positionieren von Stanzeisen um Fehlerstellen herum, welches auch als Nesten bezeichnet wird, erfordert zur Erzielung hoher Ausnutzungsgrade eine große Erfahrung des Benutzers. Trotz größter Sorgfalt werden aber bei bestimmten Tierhäuten nur unzureichende Ausnutzungsgrade erzielt. Außerdem kann es selbst bei Anwendung höchster Sorgfalt vorkommen, dass bei der Bearbeitung eines Auftrages von beispielsweise 100 Zuschnittteilen, wofür mehrere Tierhäute benötigt werden, Fehler auftreten. Beispielsweise kann es bei Abarbeitung eines solchen Auftrages dazu kommen, dass einige Zuschnittteile in einer unzureichenden, andere Zuschnittteile in einer übermäßigen Zahl ausgestanzt worden sind, weil die Bedienperson den Überblick verloren hat. Auch dies führt letztendlich zu einem geringeren Ausnutzungsgrad sowie zu einer Verlängerung der Arbeitszeit, da die übermäßigen Zuschnittteile aussortiert und die fehlenden Zuschnittteile gesondert nachgearbeitet werden müssen, was mit einem hohen Aufwand verbunden ist.

Aus der DE 298 05 551 U1 ist eine Stanzmaschinen bekannt, bei welcher den einzelnen Stanzwerkzeugen jeweils eine elektromagnetische Kodiereinrichtung oder ein Transponder zugeordnet ist. An der Stanzeinrichtung ist zudem eine Antenne vorgesehen, welche einstückig mit einem Stößel ausgebildet ist und somit vertikal mit dem Stößel verfahren kann, um bei Annäherung an den Transponder anzusprechen.

Die DE 199 41 862 A1 zeigt hingegen eine Stanzvorrichtung zum Stanzen von Rohhäuten, bei welcher Stanzwerkzeuge in Werkzeuggestellen nach Art von Regalen aufbewahrt sind. Diesen Regalen sind Näherungssensoren zugeordnet, welche das Entnehmen der Stanzwerkzeuge aus den Regalen registrieren. Die Stanzwerkzeuge weisen keine Transponder auf. Ein Ausnutzungsgrad wird ermittelt.

Zudem ist aus der DE 195 22 717 C1 eine Stanzvorrichtung mit einer Projektionseinrichtung bekannt.

Dokument WO 2008/025129, veröffentlicht am 06.03.2008, mit Prioritätsdatum 28.12.2007 (später EP-A-2056996) ist Stand der Technik nach Art 54 (3) EPÜ und offenbart ein System zum Stanzen von Zuschnittteilen aus aus Tierhäuten, umfassend mehrere Auflageflächen für den Körper und eine Mehrzahl von Stanzeisen, die händisch auf dem Körper positionierbar sind, sowie eine Stanzvorrichtung, in der die Stanzeisen zur Durchführung eines Trennvorgangs beaufschlagbar sind, wobei den Stanzeisen jeweils ein Transponder zugeordnet ist und wobei eine Einrichtung zur Erfassung von Informationen des Transponders vorgesehen ist, welche einen Rechner umfasst oder mit einem Rechner des Systems verbunden ist, wobei, der Rechner durch einen Vergleich der Summe der Flächen sämtlicher aufgelegter Stanzeisen mit der Fläche des zu schneidenden Körpers einen Ausnutzungsgrad ermittelt, und wobei der Stanzvorrichtung mehrere Auflageflächen zugeordnet sind, wobei jeder Auflagefläche eine eigene Einrichtung zur Erfassung von Informationen des Transponders zugeordnet ist oder wobei mehreren Auflageflächen eine gemeinsame Einrichtung zur Erfassung von Informationen des Transponders zugeordnet ist.

Der Aufgabe liegt daher die Erfindung zugrunde, das bekannte System gemäß dem Oberbegriff des Anspruches 1 in derartig weiterzubilden, dass es eine vereinfachte oder verbesserte Bearbeitung der Körper ermöglicht.

Die Erfindung löst diese Aufgabe mit den Merkmalen des Ansprüche 1 und 6.

Das Prinzip der Erfindung besteht im Wesentlichen darin, jedem Stanzeisen ein maschinell, insbesondere berührungslos und elektronisch, auslesbares ldentifikationselement zuzuordnen. Als Transponder im Sinne der Erfindung wird dabei insbesondere ein RFID-(radio frequency identification)-Chip verstanden. Im Sinne der Erfindung ist aber jedes unter Zuhilfenahme elektromagnetischer Wellen oder optisch oder auf eine andere drahtlose Weise auslesbares Element, welches fest an einem Stanzeisen angeordnet oder einem Stanzeisen zugeordnet ist, und welches eine Identifikation des Stanzeisens durch eine Erfassungseinrichtung ermöglicht, ein Transponder. Vorzugsweise ist der Transponder ein RFID-Chip, in den Daten oder Informationen über das entsprechende Stanzeisen gespeichert sind. Beispielsweise kann die Art des Stanzeisens, etwa durch Angabe einer bestimmten Form oder Kontur, oder eine Nummer des Stanzeisens gespeichert sein. Gleichermaßen kann eine Information über die Größe, d.h. Fläche, des Stanzeisens in dem Transponder gespeichert sein. Alternativ kann infolge einer Übermittlung der Identifikationsnummer des Transponders an eine Erfassungseinheit unter Zuhilfenahme eines Rechners, beziehungsweise einer in dem Rechner abgelegten Tabelle, ein Rückschluss möglich sein, welcher Art das Stanzeisen ist und/oder welche Größe das entsprechende Stanzeisen besitzt.

Die Erfassungseinheit kann beispielsweise oberhalb eines Bearbeitungstisches angeordnet sein, der die Auflagefläche bereitstellt. Beispielsweise kann die Erfassungseinrichtung deckenseitig angebracht sein. Jedes Mal, wenn die Bedienperson ein Stanzeisen auf die Auflagefläche oder auf den Körper auflegt, kann die Erfassungseinrichtung das entsprechende, aufgelegte Stanzeisen erkennen. Die Erfassungseinheit weist einen Rechner auf oder ist mit einem Rechner verbunden. Der Rechner kann des Weiteren mit einer Anzeigeeinheit verbunden sein, und veranlassen, dass die Anzeigeeinheit Informationen anzeigt, die von der Bedienperson einsehbar oder erkennbar sind.

Beispielsweise kann die Bedienperson die Aufgabe besitzen, 20 Zuschnittteile einer ersten Art und 15 Zuschnittteile einer zweiten Art in einer optimierten Weise auf der Tierhaut oder auf mehreren Tierhäuten zu positionieren. Jedes Mal, wenn die Bedienperson ein Stanzeisen erster Art auf die Auflagefläche auflegt, kann die Erfassungseinheit dies erkennen, und beispielsweise die Stückzahl der bereits aufgelegten Stanzeisen erster Art und gegebenenfalls auch die Stückzahl der bereits aufgelegten Stanzeisen zweiter Art anzeigen. Alternativ oder zusätzlich kann die verbleibende Reststückzahl der noch aufzulegenden Stanzeisen erster und zweiter Art angezeigt werden.

Insbesondere wenn man berücksichtigt, dass eine Vielzahl unterschiedlicher Zuschnittteile bei einer Abarbeitung eines Auftrages erforderlich ist, beispielsweise das Ausschneiden 35 unterschiedlicher Zuschnittteile zur Fertigung einer einzigen Fahrzeug-Leder-Sitzgarnitur, ist es deutlich, dass eine Bedienperson recht schnell den Überblick verlieren kann und sich Fehler einschleichen können. Der Rechner ist im Besitz von Informationen über die erforderlichen Stückzahlen sämtlicher unterschiedlicher Zuschnittteile und kann in Kenntnis der bereits aufgelegten Stanzeisen die Art oder die Zahl der noch aufzulegenden Zuschnittteile anzeigen. Insbesondere wenn man bedenkt, dass für einen solchen Auftrag mit beispielsweise 35 unterschiedlichen Zuschnittteilen mehrere, z.B. fünf, unterschiedliche Tierhäute sukzessive abgearbeitet werden müssen, kann auf diese Weise der Rechner den Überblick behalten, so dass die Bedienperson entlastet wird. Die Bedienperson kann sich erfindungsgemäß an der Anzeige orientieren und sieht beispielsweise, welche Arten von Zuschnittteilen noch nicht abgearbeitet sind. Die Bedienperson kann dann entsprechende Stanzeisen auswählen und auf der Auflagefläche bzw. auf dem Körper positionieren. Da zugleich auch noch die zu verbleibenden Stückzahlen angezeigt werden, kann die Bedienperson eine verbesserte Ausnutzung erzielen.

Schließlich ist es möglich, dass der Rechner Warnsignale generiert, beispielsweise ein akustisches Warnsignal, wenn eine Bedienperson ein falsches, das heißt zum Beispiel für einen entsprechenden Auftrag nicht erforderliches Stanzeisen oder ein überflüssiges, weil für einen bestimmten Auftrag bereits abgearbeitetes und nicht weiter erforderliches Stanzeisen auflegt. Auch dies kann der Bedienperson die Arbeit erleichtern.

Schließlich besteht die Möglichkeit, wie im Anspruch 11 angeführt, dass dem Rechner eine Eingabeeinheit zugeordnet ist, mit der die Bedienperson, entweder manuell oder unter Zuhilfenahme automatisierter Einlesemechanismen, dem Rechner eine Information übergibt, wie groß die Fläche der aufzulegenden oder aufgelegten Tierhaut ist. Diese Information befindet sich infolge eines vorherigen Bearbeitungsschrittes zur Flächenerfassung beispielsweise handschriftlich auf der Rückseite der Tierhaut und kann entsprechend manuell unter Zuhilfenahme der Eingabeeinheit in den Rechner eingegeben werden. Alternativ kann sich auf der Haut auch ein Bar-Code-Lese-Aufkleber befinden, der von einem entsprechenden Bar-Code-Scanner gelesen werden könnte, so dass die Information über die Größe der Haut gleichermaßen an den Rechner gelangt.

Der an den jeweiligen Stanzeisen angebrachte Transponder enthält entweder unmittelbar selbst bereits eine Information über die Größe und die Art des Stanzeisens oder übermittelt lediglich eine Kennnummer oder Identifikationsnummer, die der Computer einer Stanzeisenart und einer Größe des Stanzeisens zuordnen kann. Durch einen ständigen, sukzessiven Vergleich der Summe der Flächen sämtlicher aufgelegten Stanzeisen mit der Fläche der Haut bzw. des Körpers, kann der Rechner den jeweiligen Ausnutzungsgrad in Echtzeit ermitteln und auf der Anzeigeeinheit dem Benutzer anzeigen. Der Benutzer erkennt auf diese Weise selbständig frühzeitig, ob ein gewünschter hoher Ausnutzungsgrad erzielt werden kann, oder ob der bei einer bestimmten Konstellation und Positionierung von Stanzeisen erreichbare Ausnutzungsgrad noch zu gering ist. In diesem Fall besteht für den Benutzer die Möglichkeit, die Positionierung der Stanzeisen zu ändern, um einen höheren Ausnutzungsgrad zu erzielen.

Auch in diesem Falle könnte der Rechner ein Warnsignal, z.B. auch ein akustisches oder optisches Warnsignal ausgeben, wenn ein Mindest-Ausnutzungsgrad nicht erreicht ist. Der Stanzvorgang wird unter Umständen erst dann durchgeführt, wenn ein Mindest-Ausnutzungsgrad erzielt ist.

Das erfindungsgemäße System dient dem Stanzen von Zuschnittteilen aus flächenhaften Körpern, insbesondere aus Tierhäuten, z.B. Kuhhäuten oder Ziegenhäuten, aber auch aus Kunststofffolien, Papieren, Kartonagen, Stoffen, Textilien und technischen Textilien oder anderen flächigen, insbesondere biegeschlaffen Waren und Warenbahnen. Die Körper können diskrete Körper wie beispielsweise Tierhäute sein, aber alternativ auch endlos zugeführt werden, z.B. von einem Rollenvorrat, wie beispielsweise Stoff- oder Kartonagebahnen.

Während es bei den Tierhäuten vornehmlich darum geht, eine Positionierung der Stanzeisen um Fehlerstellen herum innerhalb der Kontur der Lederhaut vorzunehmen, kann es bei Stoffbahnen beispielsweise darum gehen, bestimmte Muster auszustanzen. Auch bei dem letzterwähnten Anwendungsbeispiel geht es allerdings um eine Optimierung des Ausnutzungsgrades, die immer im Vordergrund steht.

Soweit die flächenhaften Körper keine individuellen Fehlerstellen aufweisen, sondern sich wiederholende Muster oder musterlose Körper vorgesehen sind, können unter Umständen auch mehrere Körper übereinander gelegt und ausgestanzt werden.

Als Stanzvorrichtung kann z.B. eine Flächen-Stanzvorrichtung oder eine Rollen-Stanzvorrichtung vorgesehen sein. Die Flächen-Stanzvorrichtung vollführt mit einem Stanzstempel eine Bewegung im Wesentlichen lotrecht zu der Ebene der Auflagefläche und beaufschlagt im Wesentlichen sämtliche auf dem Körper aufgelegte Stanzeisen zeitgleich. Bei einer Rollen-Stanzvorrichtung findet während des Stanzvorganges eine Relativbewegung der Auflagefläche und damit auch des Körpers zu der Stanzvorrichtung statt.

Bei einer bevorzugten Ausführungsform ist einer Stanzvorrichtung eine Vielzahl von Auflageflächen zugeordnet. Beispielsweise kann die Anordnung einer Stanzvorrichtung für bis zu acht Auflageflächen genügen. Jede Auflagefläche kann einem Bearbeitungstisch zugeordnet sein, an dem z.B. eine von acht Bedienpersonen arbeitet. Jeweils dann, wenn die Bedienperson die Stanzeisen abschließend aufgelegt hat, kann die Auflagefläche zur Stanzvorrichtung verfahren und nach dem Stanzvorgang zu der Ursprungsposition zurückfahren.

Bei einem kontinuierlichen, durchlaufenden Prozess, beispielsweise bei endlosen Warenbahnen, ist vorzugsweise eine Stanzvorrichtung einer endlos umlaufenden Auflagefläche zugeordnet.

Soweit das System zum Stanzen von Zuschnittteilen aus Tierhäuten vorgesehen ist, kann eine Positionierung der Stanzeisen in händischer, das heißt in manueller Weise, um die Fehlerstellen herum erfolgen. Die Fehlererkennung bleibt dann der Bedienperson überlassen.

Bei einer alternativen Ausgestaltung der Erfindung kann das Auflegen der Stanzeisen auch in automatisierter, das heißt maschineller Weise, oder zumindest maschinengestützt erfolgen. Auch bei einem maschinengestützten Auflegen der Stanzeisen auf den Körper erlaubt die Anordnung eines Transponders an den jeweiligen Stanzeisen eine Kontrolle, welches Stanzeisen aufgelegt worden ist.

Vorzugsweise erlaubt das erfindungsgemäße System die elektronische Erfassung einer Information, welches Stanzeisen auf den Körper aufgelegt ist. Diese Information kann nachfolgend in elektronischer Weise von dem Rechner weiterverarbeitet werden.

Bei einer weiteren Ausgestaltung der Erfindung ermöglicht der Transponder aber auch eine Ortsbestimmung des aufgelegten Körpers relativ zu der Haut. Damit kann auch eine Lagekontrolle oder Positionskontrolle des Stanzeisens erfolgen. Dies ist insbesondere vorteilhaft, wenn die Position der Stanzeisen in einem vorherigen Nesting-Optimierungsprozess bereits vorherberechnet worden sind, beispielsweise mittels einer Projektionseinrichtung die Position der aufzulegenden Stanzeisen angezeigt wird.

Alternativ zu der zuvor beschriebenen händischen Art, die Stanzeisen aufzulegen, können mit System gemäß Ansprüche 1 und 6 die Positionen der Stanzeisen auch nach einer zuvor durchgeführten, computergestützten Optimierung auf die Tierhaut projiziert werden. In diesem Falle legt die Bedienperson die Stanzeisen gemäß der computererrechneten Vorgabe auf und positioniert die Stanzeisen entlang den Projektionslinien einer Projektoreinheit. Auch in diesem Falle ist die erfindungsgemäße Anbringung eines Transponders an dem Stanzeisen aber vorteilhaft, da die Bedienperson manuell überprüfen kann, ob ein entsprechendes Zuschnittteil tatsächlich in der von dem Computer errechneten Weise nahe an eine Fehlerstelle herangebracht werden kann oder nicht. Die Bedienperson kann gegebenenfalls manuell eingreifen und eine Neupositionierung vornehmen, wenn sie z.B. feststellt, dass infolge einer visuellen Überprüfung der Fehlerstelle ein zulässiger Fehlergrad überschritten wird.

Als Stanzeisen im Sinne der Erfindung wird jedes schablonenartige Element angesehen, welches eine Schneid- oder Stanz- oder Trennkante aufweist, die unter Beaufschlagung des Stanzeisens in der Stanzvorrichtung in der Lage ist, den Körper zu durchdringen oder zu trennen. Das Stanzeisen ist in herkömmlicher Weise von einem umlaufenden Profilrahmen gebildet, der eine Schneidkante aufweist. Der Rahmen kann eine Öffnung umgeben. Entlang der Öffnung können Verbindungsstreben angeordnet sein. Die Öffnung kann auch vollständig mit einem Versteifungselement, beispielsweise aus Holz, gefüllt sein.

Als Stanzeisen im Sinne der Erfindung kommt vorzugsweise ein metallisches Element in Betracht. Der Begriff "Stanzeisen" beschränkt sich aber nicht auf solche Materialien. Denkbar sind auch Stanzeisen aus genügend harten Werkstoffen, wie besonderen Kunststoffen oder Werkstoffkombinationen.

Gemäß einer vorteilhaften Ausgestaltung der Erfindung ist der Transponder ein RFID-Chip. Damit besteht die Möglichkeit, auf herkömmliche Elemente zurückzugreifen. Vorzugsweise wird ein RFID-Chip verwendet, der geeignet ist, auch bei unmittelbarer Anbringung an metallenen Gegenständen, ausreichende Feldstärken zu senden.

Gemäß einer weiteren vorteilhaften Ausgestaltung der Erfindung weisen die Stanzeisen jeweils einen geschlossenen Rahmen auf, der von einem Profilelement mit einer Schneidkante gebildet ist. Dies bietet die Möglichkeit, auf herkömmliche Stanzeisen zurückzugreifen. Damit besteht auch die Möglichkeit, bestehende, herkömmliche Stanzeisen durch Anbringung eines Transponders nachzurüsten.

Gemäß einer weiteren vorteilhaften Ausgestaltung der Erfindung umgibt der Rahmen eine Öffnung. Der Tansponder kann innerhalb dieser Öffnung angeordnet sein. Dies ermöglicht eine Unterbringung derart, dass der an dem Stanzeisen angeordnete Transponder den Positioniervorgang der Stanzeisen auf dem Körper nicht stört und keine Kollision mit benachbarten Stanzeisen eintritt. Auch ist der Transponder vorzugsweise derartig angebracht, dass er von den Stirnseiten des Stanzeisens jeweils geringfügig distanziert angeordnet ist.

Gemäß einer weiteren vorteilhaften Ausgestaltung der Erfindung sind innerhalb der Öffnung Verstärkungs- oder Versteifungselemente angeordnet. Diese dienen dazu, die gewählte Formgebung des Stanzeisens dauerhaft zu gewährleisten. Der Transponder kann vorteilhaft an den Verstärkungs- oder Versteifungselementen angeordnet sein. Dies ermöglicht eine besonders einfache Unterbringung des Transponders. Insbesondere für den Fall, dass die Verstärkungs- oder Versteifungselemente nicht aus Metall bestehen, ist die Anbringung vorteilhaft, da die Feldstärkenschwächung reduziert werden kann.

Gemäß der Erfindung ist eine Einrichtung zur Erfassung von Informationen des Transponders vorgesehen. Diese Einrichtung kann eine herkömmliche Einrichtung sein, die mit herkömmlichen Transpondern, insbesondere mit herkömmlichen RFID-Chips, kooperiert. Die Einrichtung zur Erfassung von Informationen des Transponders ist eine Sende-Empfänger-Einheit. Sie ist in der Lage Informationen zu senden und z.B. infolge einer Anregung des im Transponder enthaltenen Schaltkreises Signale des Transponders zu empfangen. Die Einrichtung zur Erfassung ist insbesondere derartig ausgelegt und/oder angeordnet, dass sie feststellen kann, dass ein bestimmtes Stanzeisen mit einem bestimmten Transponder auf einer bestimmten Auflagefläche angeordnet ist. Vorzugsweise kann sie diese Information in Echtzeit verarbeiten und einer Anzeigeeinrichtung zuführen.

Hierzu ist die Einrichtung zur Erfassung von Informationen einen Rechner oder ist mit einem Rechner verbunden. Der Rechner kann ein herkömmlicher Computer, beispielsweise ein Personalcomputer sein. Der Rechner umfasst weiter vorzugsweise wenigstens eine Schnittstelle zur Übermittlung von Informationen an eine Anzeigeeinrichtung über die Arten und Größen, gegebenenfalls auch die Formen der Stanzeisen sowie die abzuarbeitenden Aufträge, das heißt die Zahl und die Art bestimmter Zuschnittteile für einen bestimmten Auftrag, z.B. für eine Sitzmöbelgruppe Nr. 1 oder eine Sitzmöbelgruppe Nr. 2.

Mit dem Rechner kann weiter vorteilhaft eine Eingabevorrichtung verbunden sein, mit der ein Benutzer manuell oder unter Zuhilfenahme von automatisiert einlesbaren Informationen Daten über den zu bearbeitenden Körper, wie zum Beispiel die Größe der Fläche einer zu bearbeitenden Haut und/oder Informationen über die Art und/oder die Zahl der auszustanzenden Zuschnittteile eingeben kann. Die Eingabevorrichtung ermöglicht es also, dass die Bedienperson mit dem Rechner kommuniziert. Die erforderlichen Daten können von der Bedienperson manuell eingegeben werden, beispielsweise über eine Tastatur. Alternativ können die erforderlichen Daten automatisiert eingegeben werden, beispielsweise unter Verwendung eines mit dem Rechner verbundenen Bar-Code-Lesers. Letzteres ist insbesondere vorteilhaft, wenn sich auf der Haut ein Bar-Code befindet, der Informationen über die Größe der jeweiligen Haut enthält. gemäß Anspruch 11 ist eine manuell bedienbare Eingabeeinheit oder Barcode-Scanner vorgesehen.

Gemäß einer weiteren vorteihaften Ausgestaltung der Erfindung ist mit dem Rechner eine Anzeigeeinheit verbunden, die dem Benutzer Informationen anzeigen kann. Die Anzeigeeinheit dient z.B. dazu, dem Benutzer eine Information zukommen zu lassen, welcher Ausnutzungsgrad zu einen, bestimmten Zeitpunkt erreicht ist und/oder wie viele Zuschnitteile und/oder welcher Art für einen bestimmten Auftrag noch auszustanzen sind, beziehungsweise wie viele Stanzeisen (man spricht auch von Schablonen) auf den Körper noch aufzulegen sind.

Gemäß der Erfindung sind einer Stanzeinrichtung mehrere Auflageflächen zugeordnet. Dies ist insbesondere vorteilhaft, wenn die Auflageflächen relativ zu der Stanzvorrichtung verlagerbar sind. Beispielsweise können einer Stanzvorrichtung acht Auflageflächen an acht unterschiedlichen Bearbeitungstischen zugeordnet sein.

Weiter vorteilhaft ist jeder Auflagefläche eine Einrichtung zur Erfassung von Informationen des Transponders zugeordnet. Bei dieser Ausführungsform weist jede Auflagefläche eine eigene Einrichtung zur Erfassung von Informationen des Transponders auf. Entsprechend der Zahl der Auflageflächen wird eine entsprechende Zahl an Einrichtungen zur Erfassung von Informationen bereitgestellt. Diese können beispielsweise mit einem gemeinsamen Rechner verbunden sein. Alternativ können selbstverständlich auch mehrere Rechner vorgesehen sein.

Die Einrichtung zur Erfassung von Informationen kann mit allen Transpondern kommunizieren oder erkennt alle Transponder, die Stanzeisen zugehörig sind, die auf den Körper aufgelegt sind. Sie erfasst also nicht die Stanzeisen beziehungsweise Transponder, die noch nicht auf dem Körper aufgelegt sind, sondern beispielsweise in einer benachbart der Auflagefläche angeordneten Unterbringungskammer aufbewahrt werden.

Die Einrichtung kann erfassen, dass ein bestimmter Transponder, und damit ein bestimmtes Stanzeisen, auf den Körper aufgelegt worden ist oder gerade aufgelegt wird.

Alternativ ist mehreren Auflageflächen eine gemeinsame Einrichtung zur Erfassung von Informationen des Transponders oder der Transponder zugeordnet. Im Falle einer gemeinsamen Einrichtung zur Erfassung kann die Einrichtung unterscheiden, welche Stanzeisen und welche Transponder welcher Auflagefläche zugehörig sind. Beispielsweise kann eine gemeinsame Einrichtung zur Erfassung auch benachbart der Stanzvorrichtung angeordnet oder der Stanzvorrichtung zugehörig sein. So kann eine Erfassung der Transponderinformationen bei einer Ausführungsform der Erfindung spätestens immer dann erfolgen, wenn ein Stanzschritt unmittelbar bevorsteht.

Demgegenüber bevorzugt schlägt die Erfindung aber vor, eine Erfassung sämtlicher Transponderinformationen und eine Anzeige der erhaltenen, beziehungsweise bearbeiteten Informationen, immer in Echtzeit vorzunehmen, also dann, wenn die Stanzeisen auf die Auflageflächen gerade aufgelegt worden sind oder gerade aufgelegt werden.

Unabhängig davon, ob das System mit einer gemeinsamen Einrichtung zur Erfassung der Information oder mit mehreren Einrichtungen zur Erfassung der Informationen ausgestattet ist, muss das System gewährleisten, dass einerseits eine Zuordnung der zahlreichen Stanzeisen und der gleichermaßen zahlreichen Transponder zu den unterschiedlichen Auflageflächen erfolgt und andererseits eine Unterscheidung getroffen werden kann, welche Stanzeisen auf einen bestimmten Körper aufgelegt sind, und welche Stanzeisen nicht aufgelegt sind. Diese Unterscheidung kann beispielsweise über die Messung einer Distanz zwischen der Erfassungseinheit und der Auflagefläche getroffen werden. Dies kann beispielsweise über die Messung von Signalstärken oder Feldstärken erfolgen.

Alternativ könnte die Unterbringung der Stanzeisen benachbart einer Auflagefläche allerdings auch in einem Aufbewahrungsraum erfolgen, der auf eine besondere Weise von der Erfassungseinheit abgeschirmt ist. Auf diese Weise kann gewährleistet werden, dass die in der Unterbringungskammer befindlichen Transponder von der Erfassungseinheit nicht erkannt werden, aber dann erkannt werden, wenn sie aus der Unterbringungskammer herausgenommen werden und auf die Auflagefläche aufgelegt werden.

Gemäß einem zweiten Aspekt bezieht sich die Erfindung auf ein Verfahren zum Ausstanzen von Teilen aus flächigen Körpern nach Anspruch 11.

Das erfindungsgemäße Verfahren sieht demnach vor, dass zunächst ein Körper, insbesondere eine Tierhaut, auf eine Auflagefläche aufgelegt wird. Anschließend wird ein Stanzeisen auf den Körper positioniert. Schließlich werden Signale mit Informationen über das Stanzeisen, z.B. eine Identifikationsnummer, an eine Einrichtung zur Erfassung von Informationen übermittelt. Dies geschieht unter Zuhilfenahme eines an dem Stanzeisen befestigten Transponders.

Von Bedeutung ist, dass die Übermittlung der Signale erst stattfindet, wenn das entsprechende Stanzeisen auf den Körper aufgelegt wird oder gerade auf dem Körper aufgelegt worden ist. Alternativ kann die Einrichtung zum Erfassen unterscheiden, ob das Stanzeisen auf den Körper aufgelegt ist oder nicht. Erst nach der Übermittlung der Signalinformation werden die Teile ausgestanzt. Vorzugsweise werden die Schritte b) und c) zahlreich wiederholt, bis der flächige Körper, insbesondere die Tierhaut, mit derart vielen Stanzeisen belegt ist, dass ein hoher Ausnutzungsgrad erzielt ist.

Weiter vorteilhaft kann jedes Mal nach der Übermittlung der Signale an die Erfassungseinrichtung eine Anzeige einer Stückzahl von Stanzeisen erfolgen. Die Anzeige kann insbesondere auf einer Anzeigeeinheit erfolgen, die mit einem Rechner verbunden ist, der Bestandteil der Einrichtung zur Erfassung von Informationen ist, oder mit dieser verbunden ist. Angezeigt wird vorteilhaft die Zahl der auf den Körper aufgelegten Stanzeisen. Erfindungsgemäß werden die Art oder die Zahl Stückzahlen der noch aufzulegenden oder der insgesamt bereits aufgelegten Stanzeisen angezeigt.

Weiter vorteilhaft werden die Stückzahlen für unterschiedliche Stanzeisen aufgeführt, das heißt für Stanzeisen unterschiedlicher Art. Dem Benutzer kann so erfindungsgemäß die Information vermittelt werden, wie viele Stanzeisen welcher Art noch aufgelegt werden müssen.

Weiter vorteilhaft wird vor dem erstmaligen Durchführen des Schrittes b) eine Information über die Fläche des Körpers an die Einrichtung zur Erfassung von Informationen übermittelt, oder an einen dieser Einrichtung verbundenen Rechner übertragen. Auch kommt dem Rechner eine Information über die Größe des entsprechenden Stanzeisens zu. Auf diese Weise kann der Rechner den Ausnutzungsgrad, insbesondere in Echtzeit, ermitteln.

Bezüglich der Erfindung des Anspruches 6 kann zur Vermeidung von Wiederholungen auf die obigen, umfangreichen Schilderungen der Vorteile und der erfindungsgemäßen Prinzipien zu Anspruch 1 und zu den darauf rückbezogenen Ansprüchen zurückgegriffen werden.

Weitere Vorteile der Erfindungen ergeben sich aus den nicht zitierten Unteransprüchen sowie anhand der nun folgenden Beschreibungen der in den Figuren dargestellten Ausführungsbeispiele der Erfindung. In den Figuren zeigen:
- Fig.1: in einer schematischen Draufsicht ein erstes Ausführungsbeispiel eines erfindungsgemäßen Systems mit vier verlagerbaren Auflageflächen und einer Stanzvorrichtung,
- Fig. 2: in vergrößerter Darstellung beispielhaft einen einzigen Bearbeitungstisch der Fig. 1 mit einer Auflagefläche,
- Fig. 3: in einer schematischen Draufsichtdarstellung ein erstes Ausführungsbeispiel eines Stanzeisens,
- Fig. 4: in einer schematischen teilgeschnittenen Querschnittdarstellung einen Schnitt durch das Stanzeisen und daran befestigten Transponder etwa gemäß Schnittlinie IV-IV in Fig. 3,
- Fig. 5: in einer schematischen Seitenansicht einen Bearbeitungstisch mit einer Auflagefläche und einer Bedienperson etwa gemäß Ansichtspfeil V in Fig. 2, wobei schematisch eine Einrichtung zur Erfassung von Informationen, ein Rechner, eine Anzeigeeinheit und eine Eingabeeinrichtung angedeutet sind, und
- Fig. 6: eine Darstellung des Bildschirminhaltes einer Anzeigeeinrichtung.

Das erfindungsgemäße System und das erfindungsgemäße Verfahren sollen nachfolgend anhand der Figurenbeschreibung beispielhaft erläutert werden. Der Figurenbeschreibung sei vorausgeschickt, dass der Übersichtlichkeit halber gleiche oder miteinander vergleichbare Teile oder Elemente der Erfindung mit gleichen Bezugszeichen, teilweise unter Hinzufügung kleiner Buchstaben bezeichnet worden sind.

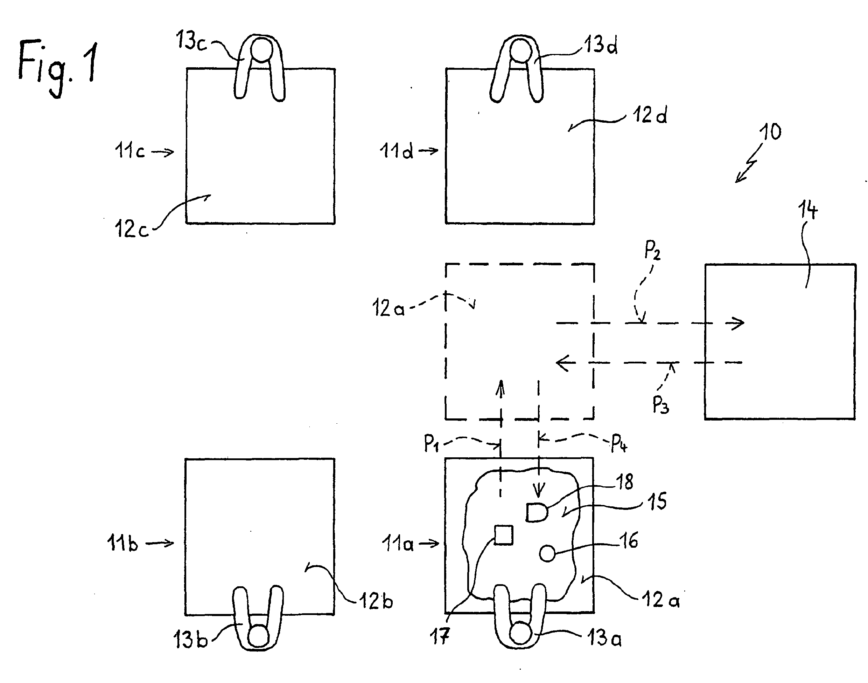

Fig. 1 zeigt in einer blockschaltbildartigen Darstellung ein erstes Ausführungsbeispiel des erfindungsgemäßen Systems 10. Dieses System umfasst vier Bearbeitungstische 11a, 11 b, 11 c, 11 d, wobei jeder Bearbeitungstisch eine eigene Auflagefläche 12a, 12b, 12c, 12d aufweist. Lediglich auf der Auflagefläche 12a des Bearbeitungstisches 11a ist ein Körper 15, beispielsweise eine Tierhaut, aufgelegt. Selbstverständlich können auch auf die übrigen Auflageflächen 12b, 12c, 12d entsprechende Tierhäute aufgelegt werden. An jedem Bearbeitungstisch 11a, 11 b, 11 c, 11 d befindet sich z. B. eine Bedienperson 13a, 13b, 13c, 13d.

Der Bearbeitungstisch dient dazu, die jeweilige Auflagefläche 12 in eine bequeme Arbeitshöhe zu bringen. Während der Bearbeitungstisch beispielsweise fest, das heißt ortsfest angeordnet sein kann, ist zumindest die Auflagefläche 12 verlagerbar und kann einer ortsfesten Stanzvorrichtung 14 zugeführt oder dieser angenähert werden. Beispielsweise kann unter Verwendung von nicht dargestellten Schienensystemen oder dergleichen erzielt werden, dass die Auflagefläche 12a mit dem darauf befindlichen Körper 15 entlang des Pfeils P₁ zunächst in eine in gestrichelten Linien dargestellte Position verfahren wird, und anschließend entlang dem Pfeil P₂ in die Stanzvorrichtung 14 eingefahren wird. Nach Durchführung des Stanzvorganges wird die entsprechende Auflagefläche 12a entlang der Richtung des Pfeils P₃ zurück verfahren und nach einer weiteren Verlagerungsbewegung entlang des Pfeils P₄ in die Ausgangssituation zurückbefördert. Anschließend kann beispielsweise, was in Fig. 1 nicht dargestellt wird, die Auflagefläche 12b zu der Stanzvorrichtung 14 hin verfahren.

Bei einer weiteren, nicht dargestellten Ausführungsform der Erfindung sind der Stanzvorrichtung 14 mehr beziehungsweise weniger Arbeitstische und/oder Auflageflächen zugeordnet. Beispielsweise kann jeder Auflagefläche 12 eine eigene Stanzvorrichtung 14 zugeordnet sein.

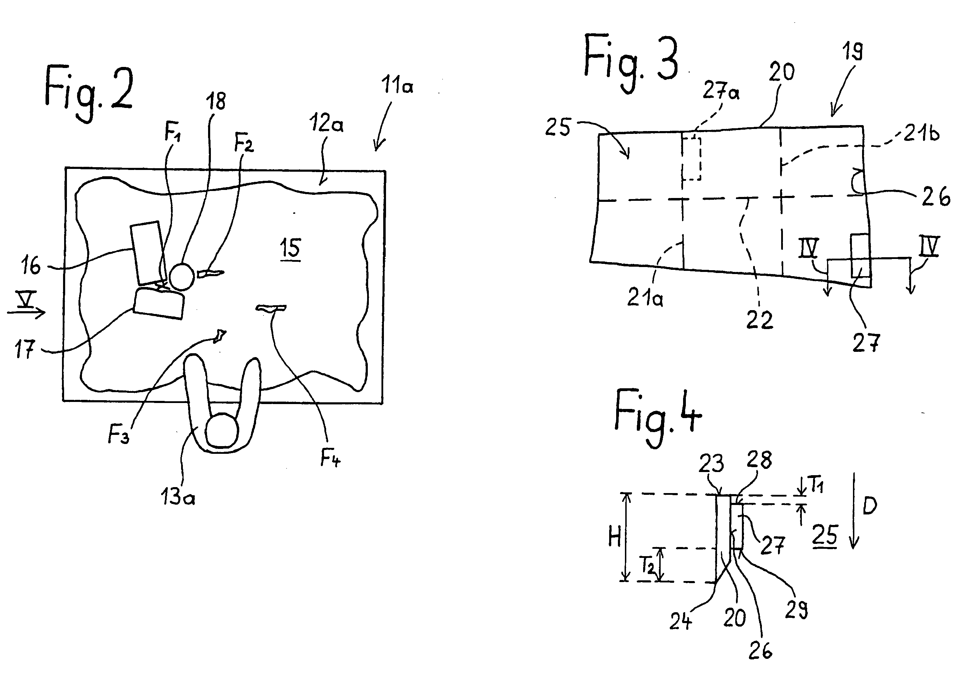

Fig. 2 zeigt in einer vergrößerten Darstellung den Arbeitstisch 11a der Fig. 1. Es sei an dieser Stelle darauf hingewiesen, dass es nicht darauf ankommt, ob die entsprechende Auflagefläche 12a quadratisch oder rechteckig ausgebildet ist oder eine andere Kontur hat. Bei der Bearbeitung von Tierhäuten werden vorzugsweise Auflageflächen der Größe 3x3 m verwendet.

Fig. 2 zeigt eine Kuhhaut, die beispielhaft vier unterschiedliche Fehlerstellen F₁, F₂, F₃, F₄ aufweist. Die Fehlerstelle F₁ kann beispielsweise ein Loch in der Tierhaut, zum Beispiel bedingt durch einen Mückenstich, die Fehlerstelle F₂ beispielsweise eine Falte, die Fehlerstelle F₃ beispielsweise eine Stelle mit einer geänderten Hautbeschaffenheit und die Fehlerstelle F₄ beispielsweise eine tiefe Falte oder Furche sein.

Die Bedienperson 13a besitzt die Aufgabe, Stanzeisen 16, 17, 18, 19 einer bestimmten Art in einer bestimmten Stückzahl auf die Kuhhaut 15 aufzulegen, und um die Fehlerstellen F₁ bis F₄ herum zu positionieren, so dass die Fehlerstellen nicht an bestimmten Stellen auf den Zuschnittteilen und später z.B. auf den Polstermöbeln auftreten. Fig. 2 zeigt beispielhaft dargestellt ein erstes, rechteckiges Stanzteil 16, ein zweites, im Wesentlichen rechteckiges Stanzteil 17 und ein drittes, im Wesentlichen kreisrundes Stanzteil 18. Diese drei Stanzteile verdeutlichen, dass eine Positionierung um die Fehlerstelle F₁ herum derartig erfolgen soll, dass die Fehlerstelle außerhalb der Konturen der Zuschnittteile liegt.

Es ist deutlich, dass das auszuschneidende Zuschnittteil eine Kontur aufweist, die der Kontur des Stanzteils entspricht.

Zur Erläuterung eines Stanzteils wird nunmehr auf die Fig. 3 und 4 verwiesen. Fig. 3 zeigt in Draufsicht ein Stanzteil 19 einer viereckigen, im Wesentlichen unregelmäßigen Kontur. Das Stanzteil 19 weist einen geschlossenen, umlaufenden Rahmen auf, der sich aus der Schnittdarstellung der Fig. 4 ergibt. Der Rahmen weist eine Höhe H auf, und erstreckt sich von einer Schneidkante 24 bis zu einer Druckseite 23. Die Schneidkante 24 liegt im auf den Körper 25 aufgelegten Zustand des Stanzeisens 19 auf dem Körper 15 auf. Die Druckseite 23 wirkt mit der Stanzvorrichtung 14 zusammen und wird beaufschlagt, und zwar im Wesentlichen entlang der Richtung des Pfeils D, also entlang einer Richtung der Druckbeaufschlagung.

Der Rahmen 20 des Stanzeisens 19 umgibt eine Öffnung 25. Entlang der Öffnung 25 können in Fig. 2 als vertikale Verstrebungen angedeutete Versteifungsrippen 21a und 21b oder im Wesentlichen horizontal verlaufende Streben 22 in beliebiger Zahl verlaufen. Auch kann die Öffnung 25 im Wesentlichen befüllt sein, beispielsweise mit einem nicht dargestellten Versteifungselement aus Holz.

An der Innenseite 26 des Rahmens 20 ist ein Transponder 27 befestigt. Die Befestigung kann beispielsweise durch Kleben, aber auch durch jede andere geeignete Befestigungsart wie Schrauben, Nieten oder dergleichen vorgenommen sein. Der Transponder 27 weist eine Höhe auf, die deutlich geringer ist als die Höhe H des Rahmens 20. Insbesondere ist im montierten Zustand die Oberseite 28 des Transponders 27 unter einem Abstand T₁ von der Oberseite 23 des Rahmens beabstandet. Gleichermaßen ist die Unterseite 29 des Transponders unter einem Abstand T₂ von der Schneidkante 24 beabstandet.

Damit wird verhindert, dass der Transponder 27 den eigentlichen Trennvorgang, bei dem sich die Schneidkante 24 in den auszustanzenden Körper 15 eingräbt, beeinträchtigt. Andererseits dienen die Abstände T₁ und T₂ dazu, eine Beeinträchtigung des Transponders infolge der Druckbeaufschlagung zu vermeiden.

Der Transponder ist auf der Innenseite 26 des Rahmens festgelegt, so dass Kollisionen mit benachbart anzuordnenden Stanzeisen ausgeschlossen werden können.

Alternativ kann ein Transponder 27a auch an einer innerhalb der Öffnung 25 angeordneten Versteifungsrippe oder -strebe 22a befestigt sein, wie dies Fig. 3 in gestrichelten Linien andeutet, oder einem nicht dargestellten, innerhalb der Öffnung 25 angeordneten Versteifungselement befestigt sein.

Angemerkt sei, dass einem Stanzeisen beispielsweise auch mehrere Transponder zugeordnet sein können, beispielsweise um eine bessere Detektierbarkeit zu erzielen.

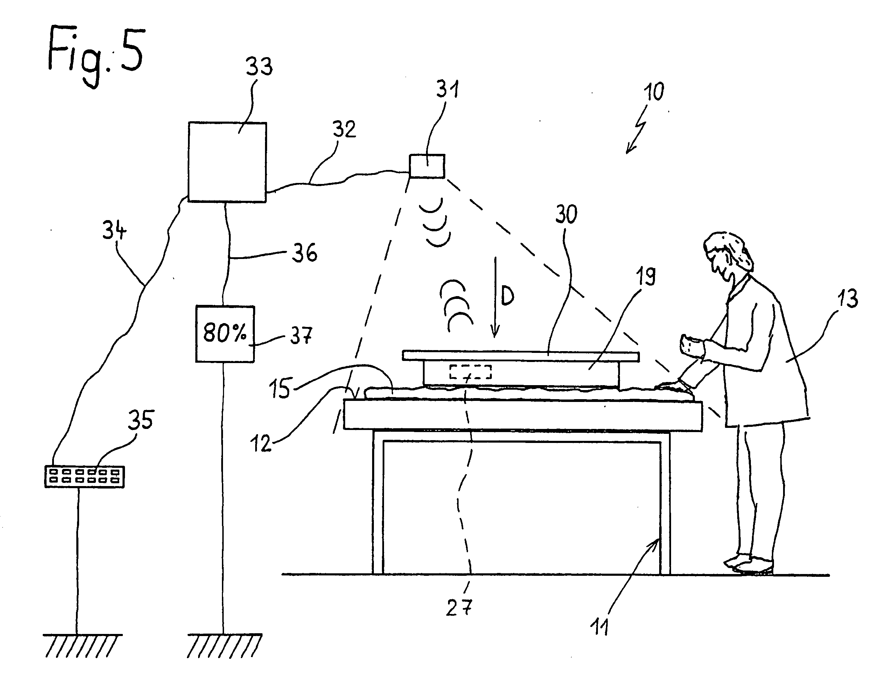

Anhand der Fig. 5 soll nun das System 10 insgesamt beschrieben werden:

Fig. 5 zeigt in einer Seitenansicht einen Bearbeitungstisch 11 mit einer Auflagefläche 12. Auf der Auflagefläche 12 befindet sich ein aufgelegter Körper 15, der auszustanzen ist. Fig. 5 zeigt der Übersichtlichkeit halber lediglich ein einziges, übertrieben groß dargestelltes Stanzeisen 19 mit einem daran befestigten Transponder 27. Auch in Fig. 5 ist die Richtung der Druckbeauschlagung beim Stanzen mit D bezeichnet. Zur Durchführung eines Stanzvorganges kann z.B. noch ein gesonderter Körper, beispielsweise eine ebene Platte 30, auf sämtliche Stanzeisen aufgelegt werden. Dies dient in der Stanzvorrichtung 14 beispielsweise einer Vergleichmäßigung des Stanzdrucks.

Angemerkt sei, dass die Vorrichtung zur Verlagerung der Auflagefläche 12 und/oder zur Verlagerung des Tisches 11 relativ zu der Stanzvorrichtung 14, nicht dargestellt ist.

Fig. 5 zeigt eine Einrichtung 31 zur Erfassung von Informationen des Transponders 27. Über ein Verbindungskabel 32 ist die Einrichtung 31 mit einem Rechner 33 verbunden. Der Rechner 33 kann alternativ auch Bestandteil der Einrichtung 31 sein. Über ein zweites Kabel 34 ist der Rechner 33 mit einer Eingabevorrichtung 35 verbunden. Der Rechner 33 ist über ein weiteres Kabel 36 mit einer Anzeigeeinrichtung 37 verbunden.

Sowohl die Eingabevorrichtung 35 als auch die Anzeigevorrichtung 37 sind vorzugsweise ortsfest angeordnet. Während die Eingabevorrichtung 35 bevorzugt in unmittelbarer Nähe des Tisches 11, beispielsweise auch direkt an dem Tisch 11, angeordnet sein kann, um der Bedienperson 13 eine bequeme Handhabung zu ermöglichen, kommt es für die Anzeigeeinrichtung 37 vor allem darauf an, dass sie von der Bedienperson 13 gut einsehbar und erkennbar ist. Selbstverständlich können die Eingabevorrichtung 35 und die Anzeigevorrichtung 37 auch zusammengefasst sein und lediglich mit einem einzigen Kabel mit dem Rechner 33 verbunden sein.

Die Funktionsweise des Systems 10 beziehungsweise der Ablauf des erfindungsgemäßen Verfahrens ist wie folgt:

Die Bedienperson 13 legt ein bestimmtes Stanzeisen, zum Beispiel das Stanzeisen 19 mit einem bestimmten Transponder 27 auf die Tierhaut 15 auf. Sie achtet dabei, wie in Fig. 2 angedeutet, darauf, dass die Stanzeisen um Fehlerstellen herum positioniert werden. Jedes Stanzeisen 16, 17, 18, 19 weist einen eigenen Transponder oder einen bestimmten Typ von Transponder auf. Vorzugsweise ist in jedem Transponder eine Information über die Art des Stanzeisens enthalten. Die Information kann auch eine bestimmte Frequenz sein, unter der der Transponder Signale emittieren kann. Gleiche Arten von Stanzeisen können auch gleiche Identifikationsnummern oder gleiche Frequenzen enthalten bzw. emittieren.

Alternativ ist der Transponder identifizierbar, so dass der Rechner 33 und/oder die Erfassungseinheit 31 eine Erkennung des Transponders zulässt und den Transponder zu Informationen über das entsprechende Stanzeisen, beispielsweise die Art des Stanzeisens oder die Größe des Stanzeisens, in Bezug setzen kann.

Der Benutzer hat beispielsweise einen Auftrag abzuarbeiten, der im einfachsten Falle vorsieht, dass möglicht viele identische Stanzeisen 19 auf der Tierhaut 15 positioniert werden sollen. In diesem Falle ist das Stanzeisen 19 der Fig. 5 übertrieben groß dargestellt. Bei diesem Auftrag geht es also darum, möglichst viele kleine Stanzeisen identischer Art und Größe auf der Haut unterzubringen und dabei die individuelle Kontur der Haut, das heißt ihren Umriss, und die individuelle Verteilung und den Grad der Fehlerstellen zu berücksichtigen.

Jedes Mal, wenn die Bedienperson 13 ein weiteres Stanzeisen 19 auf die Tierhaut 15 auflegt, kann die Erfassungseinrichtung 31 dies feststellen. Sie kennt die Größe des verwendeten Stanzeisens, entweder aus einer in dem Rechner zuvor abgelegten Tabelle oder infolge einer individuellen Übermittlung von Informationen der Bedienperson 13 an den Rechner 33. Des Weiteren kennt die Erfassungseinheit 31 die Flächengröße der jeweiligen Haut 15, die sich auf der Auflagefläche 12 befindet. Diese Information kann zuvor manuell oder beispielsweise unter Zuhilfenahme eines Bar-Code-Lesers an den Rechner 33 übermittelt worden sein.

Im einfachsten Fall sei angenommen, die Tierhaut 15 auf der Auflagefläche 12 weise eine Fläche von 100 cm² auf. Das Zuschnittteil, welches mit dem Stanzeisen 19 ausgestanzt werden soll, weist eine Fläche von 8 cm² auf. Weiter sei angenommen, Fig. 5 zeige eine Situation, in der der Benutzer 13 gerade das zehnte Stanzeisen 19 auf die Tierhaut 15 aufgelegt hat und zuvor seien bereits neun Stanzeisen 19 auf die gleiche Haut aufgelegt worden und befinden sich noch auf der Haut. Unmittelbar nach dem Auflegen des zehnten Stanzeisens 19 auf die Tierhaut 15 kann die Erfassungseinheit 31 feststellen, dass sich das zehnte Stanzeisen 19 auf der Tierhaut 15 befindet und an den Rechner 33 diese Informationen übermitteln. Dieser errechnet durch Summierung sämtlicher Stanzeisenflächen und in Kenntnis der Gesamtgröße der Haut den Ausnutzungsgrad und zeigt diesen Ausnutzungsgrad von 80% auf der Anzeigeeinrichtung 37 an. Dem Benutzer 13 wird diese Information deutlich sichtbar übermittelt, so dass dieser eine Entscheidung vornehmen kann, ob er mit der gewählten Positionierung der einzelnen Stanzeisen zufrieden sein kann oder eine Änderung der Positionierung der Stanzeisen vornehmen möchte, beispielsweise um einen größeren Ausnutzungsgrad zu erzielen.

Die Einrichtung 31 zur Erfassung der Informationen des Transponders kann insoweit auch berücksichtigen, wenn ein einmal auf eine Tierhaut oder einen sonstigen Körper 15 aufgelegtes Stanzeisen wieder von dem Tisch oder von der Auflagefläche entnommen wird. Entsprechend kann auch der Rechner 33 diese Information berücksichtigen und den Ausnutzungsgrad entsprechend korrigieren bzw. eine Stückzahlliste oder eine Stückzahlanzeige entsprechend ändern.

Zur Abarbeitung eines nachfolgenden Auftrages kann beispielsweise gefordert sein, dass die gleiche Bedienperson 13 an einem gleichen Bearbeitungstisch 12 einen Auftrag abarbeitet, der vier unterschiedliche Zuschnittteile und beispielsweise vier unterschiedliche Stanzeisen erfordert. Hierzu kann beispielsweise durch eine bestimmte Ziffernkombination über die Eingabeeinrichtung 35 die Information an den Rechner 33 übermittelt werden. Beispielsweise kann die Bedienperson 13 eingeben, dass für einen bestimmten Automobilhersteller, für ein bestimmtes Fahrzeugmodell und für eine bestimmte Ausstattungsvariante eine Sitzausstattung in einer bestimmten Lederfarbe zu stanzen gewünscht ist. Diese Information kann von der Bedienperson 13 über die Eingabevorrichtung 35 entweder unmittelbar oder kodiert, beispielsweise unter Angabe einer Schlüsselnummer, eingegeben werden. Beispielsweise weiß der Rechner aufgrund einer abgelegten Tabelle dann, dass zur Bearbeitung des Auftrages mit der bestimmten Schlüsselnummer eine bestimmte Stückzahl von Teilen 1, Teilen 2, Teilen 3 und Teilen 4 erforderlich ist.

Bei einer etwas komplizierteren Auftragsvariante kann beispielsweise gewünscht sein, dass zwei Aufträge gleichzeitig abgearbeitet werden sollen. Da sich hierdurch die Zahl der Zuschnittteile und die Zahl möglicher Stanzeisenpositionierungen erhöht, sind hierbei höhere Ausnutzungsgrade möglich.

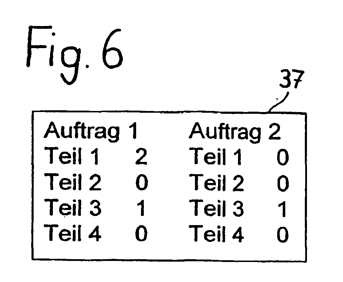

Die Anzeigeeinheit 37 ermöglicht dabei z.B. auch eine Darstellung, wie viele Stücke bestimmter Zuschnittsteile bereits aufgelegt oder noch aufzulegen sind. Fig. 6 zeigt dabei in einer Momentaufnahme für zwei unterschiedliche Aufträge 1 und 2, dass ein Teil 1 eines ersten Auftrages noch in einer Stückzahl von zwei zu stanzen ist, wohingegen die erforderliche Stückzahl des Teils 2 bereits erreicht ist. Die zweite Spalte unter Auftrag 1 der Fig. 6 zeigt also die noch verbleibenden, abzuarbeitenden Stückzahlen der jeweiligen Zuschnittteile des Auftrags 1 an.

Die Anzeigeeinrichtung 37 kann in einer Darstellung der Fig. 6 und in einer Darstellung der Fig. 5 beide Informationen, also sowohl Informationen über den derzeit erreichten Ausnutzungsgrad als auch Informationen über die Stückzahlen der bereits aufgelegten oder der noch aufzulegenden Stanzeisen unter Berücksichtigung der Arten der Zuschnittteile auch kombiniert, in einer leicht erkennbaren Form darstellen. Diese Darstellung wird von der auf dem Rechner 33 ablaufenden Software berechnet.

Jedes Mal dann, wenn ein entsprechendes Stanzeisen auf die entsprechende Auflagefläche 12 oder auf den zu bearbeitenden Körper 15 aufgelegt wird, kann die Restteilestürkzahl gemäß der Darstellung der Fig. 6 gleichermaßen angepasst werden. Würde bei Darstellung der Fig. 6 also beispielsweise das Teil 3 des Auftrages 1 aufgelegt werden, würde die Zeile 4, Spalte 2 dargestellte 1 auf 0 heruntergefahren.

Mit anderen Worten ausgedrückt, ist der Einrichtung 31 zur Erfassung der Informationen und/oder dem Rechner 33 ein Zähler zugeordnet.

Durch Echtzeitanzeige des Ausnutzungsgrades können auch Lernerfolge erreicht werden. So kann die Bedienperson 13 unmittelbar erfahren, welchen Ausnutzungsgrad eine bestimmte Stanzeisen-Positionierung zulässt.

## Patentansprüche

1. System (10) zum Stanzen von Zuschnittteilen aus flächenhaften Körpern (15), insbesondere aus Tierhäuten, umfassend eine Auflagefläche (12, 12a, 12b, 12c, 12d) für den Körper und eine Mehrzahl von Stanzeisen (16, 17, 18, 19), die insbesondere händisch auf dem Körper positionierbar sind, sowie eine Stanzvorrichtung (14), in der die Stanzeisen zur Durchführung eines Trennvorgangs beaufschlagbar sind, wobei den Stanzeisen jeweils ein Transponder (27) zugeordnet ist und wobei eine Einrichtung (31) zur Erfassung von Informationen des Transponders (27) vorgesehen ist, welche einen Rechner (33) umfasst oder mit einem Rechner (33) des Systems (10) verbunden ist, **dadurch gekennzeichnet, dass** eine Projektionseinrichtung vorgesehen ist, welche die Position der aufzulegenden Stanzeisen anzeigt, wobei mit dem Rechner (33) eine Anzeigeeinheit (37) des Systems (10) verbunden ist, die einem Benutzer (13) Informationen anzeigen kann, und wobei der Rechner (33) in Kenntnis der erforderlichen Stückzahlen der Zuschnittteile und in Kenntnis der bereits aufgelegten Stanzeisen veranlasst, dass die Anzeigeeinheit (37) die Art oder die Zahl der noch abzuarbeitenden Zuschnittteile anzeigt, und dass der Stanzvorrichtung mehrere Auflageflächen zugeordnet sind, wobei jeder Auflagefläche eine eigene Einrichtung (31) zur Erfassung von Informationen des Transponders zugeordnet ist oder wobei mehreren Auflageflächen eine gemeinsame Einrichtung zur Erfassung von Informationen des Transponders zugeordnet ist.

2. System nach Anspruch 1, **dadurch gekennzeichnet, dass** der Transponder (27) ein RFID-Chip ist.

3. System nach Anspruch 1 oder 2, **dadurch gekennzeichnet, dass** mit dem Rechner (33) eine Eingabevorrichtung (35) verbunden ist, mit der der Benutzer (13) manuell oder unter Zuhilfenahme von automatisiert einlesbaren Informationen Daten über den zu bearbeitenden Körper (15), wie z.B. die Flächengröße einer zu bearbeitenden Haut und/oder Informationen über die Art und/oder Zahl der auszustanzenden Zuschnittteile zum Zwecke einer Übermittlung an den Rechner eingeben kann.

4. System nach einem der vorangegangenen Ansprüche, **dadurch gekennzeichnet, dass** der Rechner einen Ausnutzungsgrad ermittelt.

5. System nach einem der vorangegangenen Ansprüche, **dadurch gekennzeichnet, dass** die Anzeigeeinheit den Ausnutzungsgrad anzeigt.

6. Verfahren zum Ausstanzen von Teilen aus flächigen Körpern (15), insbesondere aus Tierhäuten, umfassend die folgenden Schritte:
a) Auflegen eines Körpers (15) auf eine Auflagefläche (12, 12a, 12b, 12c, 12d),
b) Positionieren eines Stanzeisens (16, 17, 18, 19) auf dem Körper (15), wobei mittels einer Projektionseinrichtung die Position der aufzulegenden Stanzeisen angezeigt wird,
c) Übermittlung von Signalen mit Informationen über das Stanzeisen oder mit einer Information zur Ermöglichung einer Identifizierung des Stanzeisens unter Zuhilfenahme eines an dem Stanzeisen befestigten Transponders (27) an eine Einrichtung (31) zur Erfassung von Informationen,
c1) Anzeigen der insgesamt während eines Auftrags noch auf den Körper aufzulegenden und/oder bereits auf den Körper oder mehreren Körpern aufgelegten Stanzeisen, insbesondere aufgeschlüsselt für Stanzeisen unterschiedlicher Art,
d) Stanzen der Teile durch Beaufschlagen der Stanzeisen in einer Stanzvorrichtung (14), welcher mehrere Auflageflächen zugeordnet sind, wobei jeder Auflagefläche eine eigene Einrichtung (31) zur Erfassung von Informationen des Transponders zugeordnet ist oder wobei mehreren Auflageflächen eine gemeinsame Einrichtung zur Erfassung von Informationen des Transponders zugeordnet ist.

7. Verfahren nach Anspruch 6, **dadurch gekennzeichnet, dass** die Schritte b) und c) vor Durchführung des Schrittes d) mehrfach wiederholt werden.

8. Verfahren nach Anspruch 6 oder 7, **dadurch gekennzeichnet, dass** jedes Mal nach Schritt c) der folgende Schritt durchgeführt wird:
c2) Anzeigen einer Stückzahl der auf den Körper (15) aufgelegten Stanzeisen.

9. Verfahren nach einem der Ansprüche 6 bis 8, **dadurch gekennzeichnet, dass** vor dem erstmaligen Durchführen des Schrittes b) der folgende Schritt durchgeführt wird:
i) Übermitteln einer Information über die Fläche des Körpers (15) an die Einrichtung (31) zur Erfassung von Informationen oder an einen mit dieser Einrichtung (31) verbundenen Rechner (33).

10. Verfahren nach Anspruch 9, **dadurch gekennzeichnet, dass** nach jedem Schritt c) oder nach jedem Schritt c1) der folgende Schritt durchgeführt wird:
c3) Anzeigen eines Ausnutzungsgrades.

11. System (10) zum Stanzen von Zuschnittteilen aus flächenhaften Körpern (15), insbesondere aus Tierhäuten, umfassend eine Auflagefläche (12, 12a; 12b, 12c, 12d) für den Körper und eine Mehrzahl von Stanzeisen (16, 17, 18, 19), die insbesondere händisch auf dem Körper positionierbar sind, sowie eine Stanzvorrichtung (14), in der die Stanzeisen zur Durchführung eines Trennvorgangs beaufschlagbar sind, wobei den Stanzeisen jeweils ein Transponder (27) zugeordnet ist und wobei eine Einrichtung (31) zur Erfassung von Informationen des Transponders (27) vorgesehen ist, welche einen Rechner (33) umfasst oder mit einem Rechner (33) des Systems (10) verbundend ist, **dadurch gekennzeichnet, dass** zur Informationsübergabe an den Rechner, wie groß die Fläche des zu schneidenden Körpers (15) ist, eine manuell bedienbare Eingabeeinheit (35) oder ein Bar-Code-Scanner vorgesehen ist, wobei mit dem Rechner (33) eine Anzeigeeinheit (37) des Systems (10) verbunden ist, die einem Benutzer (13) Informationen anzeigen kann, und wobei der Rechner (33) in Kenntnis der erforderlichen Stückzahlen der Zuschnittteile und in Kenntnis der bereits aufgelegten Stanzeisen veranlasst, dass die Anzeigeeinheit (37) die Art oder die Zahl der noch abzuarbeitenden Zuschnittteile anzeigt, und dass der Stanzvorrichtung mehrere Auflageflächen zugeordnet sind, wobei jeder Auflagefläche eine eigene Einrichtung (31) zur Erfassung von Informationen des Transponders zugeordnet ist oder wobei mehreren Auflageflächen eine gemeinsame Einrichtung zur Erfassung von Informationen des Transponders zugeordnet ist.

## Claims

1. A system (10) for punching blank parts out of planar bodies (15), in particular out of animal hides, comprising a bearing surface (12, 12a, 12b, 12c, 12d) for the body and a plurality of punching irons (16, 17, 18, 19) which can be positioned on the body, in particular manually, and a punching device (14), in which the punching irons can be acted upon for carrying out a separating procedure, wherein a respective transponder (27) is associated with the punching irons and wherein a device (31) for collecting information from the transponder (27) is provided, which device comprises a processor (33) or is connected to a processor (33) of the system (10), **characterised in that** a projection device is provided, which displays the position of the punching irons to be applied, wherein a display unit (37) of the system (10) is connected to the processor (33) and can display information to a user (13), and wherein the processor (33), informed of the required piece numbers of blank parts and informed of the punching irons already applied, prompts the display unit (37) to display the type or number of blank parts still to be completed, and **in that** a plurality of bearing surfaces are associated with the punching device, wherein a separate device (31) for collecting information from the transponder is associated with each bearing surface or wherein a common device for collecting information from the transponder is associated with a plurality of bearing surfaces.

2. A system according to Claim 1, **characterised in that** the transponder (27) is an RFID chip.

3. A system according to Claim 1 or 2, **characterised in that** an input device (35) is connected to the processor (33), which input device can be used by the user (13) to enter data relating to the body (15) to be processed, for example the surface area of a hide to be processed and/or information relating to the type and/or number of blank parts to be punched, for transmission to the processor, the data being entered manually or with the aid of automatically readable information.

4. A system according to one of the preceding claims, **characterised in that** the processor determines a utilisation factor.

5. A system according to one of the preceding claims, **characterised in that** the display unit displays the utilisation factor.

6. A process for punching parts out of planar bodies (15), in particular out of animal hides, comprising the following steps:
a) placing a body (15) on a bearing surface (12, 12a, 12b, 12c, 12d),
b) positioning a punching iron (16, 17, 18, 19) on the body (15), wherein the position of the punching iron to be applied is displayed by means of a projection device,
c) transmitting signals containing information relating to the punching iron or containing information for enabling identification of the punching iron with the aid of a transponder (27) mounted on the punching iron to a device (31) for collecting information,
c1) indicating all the punching irons which have yet to be applied to the body during an application and/or are already applied to the body or a plurality of bodies, in particular itemised for different types of punching iron.
d) punching the parts by acting on the punching irons in a punching device (14) with which a plurality of bearing surfaces are associated, wherein a separate device (31) for collecting information from the transponder is associated with each bearing surface or wherein a common device for collecting information from the transponder is associated with a plurality of bearing surfaces.

7. A process according to Claim 6, **characterised in that** steps b) and c) are repeated a plurality of times before carrying out step d).

8. A process according to Claim 6 or 7, **characterised in that**, after step c), the following step is carried out each time:
c2) displaying a piece number of the punching irons applied to the body (15).

9. A process according to one of Claims 6 to 8, **characterised in that** the following step is carried out before step b) is carried out for the first time:
i) transmitting information relating to the surface of the body (15) to the device (31) for collecting information or to a computer (33) connected to this device (31).

10. A process according to Claim 9, **characterised in that** the following step is carried out after each step c) or after each step c1):
c3) displaying a utilisation factor.

11. A system (10) for punching blank parts out of planar bodies (15), in particular out of animal hides, comprising a bearing surface (12, 12a, 12b, 12c, 12d) for the body and a plurality of punching irons (16, 17, 18, 19) which can be positioned on the body, in particular manually, and a punching device (14) in which the punching irons can be acted upon for carrying out a separating procedure, wherein a respective transponder (27) is associated with the punching irons and wherein a device (31) for collecting information from the transponder (27) is provided, which device comprises a processor (33) or is connected to a processor (33) of the system (10), **characterised in that** a manually operable input unit (35) or a barcode scanner is provided for transmitting information to the processor relating to the size of the surface of the body (15) to be cut, wherein a display unit (37) of the system (10) is connected to the processor (33), which display unit can display information to a user (13), and wherein the processor (33), informed of the required piece number of blank parts and informed of the punching irons already applied, prompts the display unit (37) to display the type or number of blank parts still to be completed, and **in that** a plurality of bearing surfaces are associated with the punching device, wherein a separate device (31) for collecting information from the transponder is associated with each bearing surface or wherein a conunon device for collecting information from the transponder is associated with a plurality of bearing surfaces.

## Revendications

1. Système (10) pour l'estampage d'éléments de coupe à partir de corps (15) plats, en particulier à partir de peaux d'animaux, comprenant une surface d'appui (12, 12a, 12b, 12c, 12d) pour le corps et une pluralité de fers à poinçonnage (16, 17, 18, 19) qui peuvent être positionnés en particulier à la main sur le corps, ainsi qu'un dispositif d'estampage (14), dans lequel les fers à poinçonnage peuvent être contraints pour l'exécution d'une opération de séparation, un transpondeur (27) étant affecté respectivement aux fers à poinçonnage et un dispositif (31) étant prévu pour l'enregistrement d'informations du transpondeur (27), lequel comprend un calculateur (33) ou qui est relié à un calculateur (33) du système (10), **caractérisé en ce qu'**il est prévu un dispositif de projection lequel affiche la position des fers à poinçonnage à appliquer, une unité d'affichage (37) du système (10), pouvant afficher des informations à un utilisateur (13), étant reliée au calculateur (33) et le calculateur (33) portant à connaissance les nombres d'unités nécessaires des éléments de coupe et les fers à poinçonnage déjà appliqués, **en ce que** l'unité d'affichage (37) affiche le type ou le nombre d'éléments de coupe encore à traiter, et **en ce que** plusieurs surfaces d'appui sont associées au dispositif d'estampage, un dispositif propre (31) étant affecté à chaque surface d'appui pour l'enregistrement d'informations du transpondeur ou un dispositif commun étant affecté à plusieurs surfaces d'appui pour l'enregistrement d'informations du transpondeur.

2. Système selon la revendication 1, **caractérisé en ce que** le transpondeur (27) est une puce électronique RFID.

3. Système selon la revendication 1 ou 2, **caractérisé en ce qu'**au calculateur (33) est relié un dispositif d'entrée (35), à l'aide duquel l'utilisateur (13) peut entrer, manuellement ou en s'aidant d'informations pouvant être lues de manière automatisée, des données concernant le corps (15) à travailler, comme, par exemple, la grandeur de la surface d'une peau à travailler et/ou des informations concernant le type et/ou le nombre d'éléments de coupe à matricer, aux fins d'une transmission au calculateur.

4. Système selon l'une des précédentes revendications, **caractérisé en ce que** le calculateur détermine un degré d'utilisation.

5. Système selon l'une des précédentes revendications, **caractérisé en ce que** l'unité d'affichage affiche le degré d'utilisation.

6. Procédé pour matriçage de pièces à partir de corps (15) en nappe, en particulier à partir de peaux d'animaux, comprenant les étapes suivantes :
a) pose d'un corps (15) sur une surface d'appui (12, 12a, 12b, 12c, 12d),
b) positionnement d'un fer à poinçonnage (16, 17, 18, 19) sur le corps (15), la position des fers à poinçonnage à appliquer étant affichée à l'aide d'un dispositif de projection,
c) transmission de signaux, avec des informations sur le fer à poinçonnage ou avec une information permettant une identification du fer à poinçonnage, en s'aidant d'un transpondeur (27) fixé au fer à poinçonnage, au dispositif (31) pour enregistrement d'informations,
c1) affichage des fers à poinçonnage à encore appliquer sur le corps au total pendant un travail et/ou déjà appliqués sur le corps ou plusieurs corps, en particulier détaillé pour des fers à poinçonnage de type différent,
d) estampage des pièces, par sollicitation des fers à poinçonnage dans un dispositif d'estampage (14) auquel sont associées plusieurs surfaces d'appui, un dispositif propre (31) étant affecté à chaque surface d'appui pour l'enregistrement d'informations du transpondeur ou un dispositif commun étant affecté à plusieurs surfaces d'appui pour l'enregistrement d'informations du transpondeur.

7. Procédé selon la revendication 6, **caractérisé en ce que** les étapes b) et c) sont répétées plusieurs fois avant d'accomplir l'étape d).

8. Procédé selon la revendication 6 ou 7, **caractérisé en ce que** l'étape suivante est réalisée chaque fois après l'étape c) :
c2) affichage d'un nombre d'unité de fers à poinçonnage appliqués sur le corps (15).

9. Procédé selon l'une des revendications 6 à 8, **caractérisé en ce que** l'étape suivante est réalisée avant la réalisation pour la première fois de l'étape b) :
i) transmission d'une information concernant la surface du corps (15) au dispositif (31) pour enregistrement d'informations ou à un calculateur (33) relié à ce dispositif (31).

10. Procédé selon la revendication 9, **caractérisé en ce que** l'étape suivante est réalisée après chaque étape c) ou après chaque étape c1):
c3) affichage d'un degré d'utilisation.

11. Système (10) pour l'estampage d'éléments de coupe à partir de corps (15) plats, en particulier à partir de peaux d'animaux, comprenant une surface d'appui (12, 12a, 12b, 12c, 12d) pour le corps et une pluralité de fers à poinçonnage (16, 17, 18, 19) qui peuvent être positionnés en particulier à la main sur le corps, ainsi qu'un dispositif d'estampage (14), dans lequel les fers à poinçonnage peuvent être contraints pour l'exécution d'une opération de séparation, un transpondeur (27) étant affecté respectivement aux fers à poinçonnage et un dispositif (31) étant prévu pour l'enregistrement d'informations du transpondeur (27), lequel comprend un calculateur (33) ou qui est relié à un calculateur (33) du système (10), **caractérisé en ce que** pour la transmission des informations au calculateur, comme la grandeur de la surface du corps (15) à couper, il est prévu une unité d'entrée (35) utilisable manuellement ou un lecteur de code-barres, une unité d'affichage (37), pouvant afficher des informations à un utilisateur (13), du système (10) étant reliée au calculateur (33), et le calculateur (33) portant à connaissance les nombres d'unités nécessaires des éléments de coupe et les fers à poinçonnage déjà appliqués, **en ce que** l'unité d'affichage (37) affiche le type ou le nombre d'éléments de coupe encore à traiter et **en ce que** plusieurs surfaces d'appui sont associées au dispositif d'estampage, un dispositif propre (31) étant affecté à chaque surface d'appui pour l'enregistrement d'informations du transpondeur ou un dispositif commun étant affecté à plusieurs surfaces d'appui pour l'enregistrement d'informations du transpondeur.
